# EUROPEAN PATENT SPECIFICATION

(11) **EP 3 116 084 B1**
(45) Date of publication and mention of the grant of the patent: **07.09.2022**
(21) Application number: 16382322.2
(22) Date of filing: 07.07.2016
(51) Int. Cl.: H02J 3/32, H02J 3/38, H02J 13/00

(54) **ELECTRICITY DISTRIBUTION NETWORK**
STROMVERTEILUNGSNETZ
RÉSEAU DE DISTRIBUTION D'ÉLECTRICITÉ

(30) Priority: 07.07.2015 ES 201530975
(43) Date of publication of application: 11.01.2017
(73) Proprietor: Estabanell y Pahisa Energia, S.A., 08400 Granollers (Barcelona) (ES)
(72) Inventor: GALLART FERNANDEZ, Ramon, 08510 RODA DE TER (ES)
(74) Representative: Durán-Corretjer, S.L.P.

(56) References cited:
- EP-A2- 2 559 589
- WO-A1-2014/019605
- WO-A1-2015/019541
- CA-A1- 2 924 006
- US-A1- 2012 065 801
- US-A1- 2014 052 308
- US-A1- 2015 066 231

## Description

The present invention relates to the distribution and control of an electricity network.

Electricity networks in rural areas provide an electricity service to consumers with low consumption demand but are spread over a wide geographical area. The electrical capacity of said type of rural networks is therefore usually over-sized.

Said electricity networks in rural areas have a high environmental and economic impact. Said networks usually have a tree typology. Unlike rural networks, urban networks are normally meshed, which gives them great resilience. For example, as there are no redundant paths, when a breakdown occurs in a rural area, the service cannot be re-established until the breakdown has been fully repaired. Moreover, the geographical or climatic conditions may make access to the working area difficult, which considerably prolongs the time with no electricity service. With the meshed typology, these problems do not exist in urban areas or are far less significant.

On the other hand, these days, the number of electricity generation installations distributed by small producers is increasing, both from renewable sources (such as solar, miniwind and microwind), and from non-renewable sources (such as biomass and manure).

It must be borne in mind that, as well as the possibility of connection or disconnection from the network and the variable level of self-consumption, generation is unpredictable with renewable energy sources, which adds another element of difficulty in forecasting the electricity flows in the electricity network and is a challenge for maintaining the quality and stability of the electricity supply.

The electricity generated from said energy sources by small producers or self-producers is fed into a low-voltage distribution network, where there was usually only electricity consumption (users or consumers). Said producer is generally known as a 'prosumer', indicating that the consumer also generates electricity (producer) and has, or does not have, surplus production.

Microgeneration is small-scale generation of electrical power by prosumers (producer and consumer), small companies and communities to meet their own needs, as an alternative or supplement to electricity connected to the conventional centralised network.

Electricity networks and the various existing transformation elements are designed and distributed in the territory to meet the needs of the normal processes in the sector, electricity being transported and transformed from large electricity production plants, via the high-voltage grid, to be made available to the distribution companies, which transform said electricity once again in order to distribute it via their own medium- and low-voltage network to consumption points for users. Sub-stations transform the difference in electrical potential from high voltage to medium voltage and have variable regulation, whereas transformer stations or transformation centres transform the difference in electrical potential from medium to low voltage, ahead of the consumption points and do not have said regulation system. The absence of said variable regulation system means that said transformer stations are inflexible faced with any change in network voltage, which may occur when a high proportion of electricity, generated in distributed form, is fed into an area served by the same transformer centre.

The documents CA 2924006 A1 and US 2012/065801 A1 belong to the background art concerning the claimed invention.

At present, when the electricity fed into the networks threatens the control of the voltage supplied to consumers, there is only one way of solving the problem, which is to disconnect the distributed generation units from the network. Said power generation units are therefore isolated and their electricity generation is not used.

To solve the problem described, the present invention discloses means for managing a volume of electricity generated in distributed form, especially in rural areas with tree-type electricity networks. The surpluses of said distributed generation can be held in a power storage means or at a point in the network.

The present invention discloses physical means that allow a tree network to be treated in a similar way to a meshed network, referred to in the present invention as a virtual meshed network, without the need for additional investment in the construction of new electricity line infrastructure.

Said virtual meshed electricity network is obtained by introducing a local controller into the intermediate nodes (these being the electricity line confluence nodes), which local controller in turn comprises a control device, a modem or communications device and an electricity storage device. Said local controller is managed from a centralised control centre and acts as a centralised facilitator for control of the system. Said local controller permits two different operating modes of the virtual meshed network:
- Mode 1: Operation connected to the network.
- Mode 2: Operation as an island or disconnected from the network, for network maintenance or in the event of network failure.

The present invention allows a tree network to work as a virtual meshed network. According to the present invention a tree network is considered a virtual meshed network when it allows points of its network to be supplied from different freely chosen points, by selecting the transformation centre (referred to by the initials TC) that emits power from said storage device. In this way, through said local controller formed by said storage, control and communication devices, the tree network can be used as a virtual meshed network without the need to construct and lay electricity infrastructure.

In said mode 1 (operation connected to the network), using a local controller the electrical parameters (voltage and frequency) are compensated for, which has a direct impact on reducing network losses, filtering waveforms, increasing service quality and managing distributed generation.

In said mode 2 (operation as an island or disconnected from the network for maintenance or in the event of network failure), the combination of the different elements of the local controller - control, communication and storage devices - allows the service to be re-established autonomously. Said devices coordinate the generation regimes of the various sources, reducing the environmental and economic impact.

The present invention allows the ordered integration of distributed renewable generation (hereinafter DRG) suitable for rural networks, and allows systematic development of intelligent rural networks to be addressed, said intelligent rural networks being intended to allow DRGs to operate more efficiently by incorporating local, mainly renewable, energy sources, thus increasing and guaranteeing the electricity supply quality and allowing the formation of robust electrical islands which can be managed in an ordered way consistent with the territory.

In conclusion, the subject matter of the present invention discloses a tree-shaped electricity distribution network that can operate as a virtual meshed network without the need to construct new electrical line infrastructure at any voltage level.

The present invention comprises an electricity distribution network according to claim 1. Preferred embodiments are object of the subclaims.

Preferably, the present invention consists of an electricity distribution network of tree typology, supplied from a transformation centre, said network having intermediate nodes and final nodes, characterised in that it comprises in said intermediate nodes a control centre that has:
- a control device,
- a communication device, and
- an electricity storage device,
the electricity storage device being configured to store power from the network or alternatively to dump power into the network,
such that the network has means for supplying points of the network from different freely chosen points by selecting the control centre that emits power from said storage device.

Preferably, said node is an intermediate node, not a final node. More preferably, said node is not directly associated with any consumer, in other words, said node is connected only to branches of the distribution network, not to consumers.

Preferably, the tree network according to the present invention has a series of transformation centres (preferably three or more) in which the voltage level is transformed (for example from medium voltage to low voltage) and which are interconnected by a single path via electricity networks.

Preferably, said control centre is situated in said transformation centres which are interconnected via a single path.

Preferably, said communication device comprises a PLC (power line communication) telecommunications device. PLC can be expressed as communication via an electrical cable and refers to different technologies that use conventional electrical power lines as a telecommunications means which allows robust data transmission and an extension of the telecommunications network area coverage to where there is no cover from other means. PLC technology also makes use of the electricity network infrastructure as a physical telecommunications means, allowing high-speed data transactions.

Preferably, said control centre does not have an electricity generation unit.

In a non-claimed embodiment, said electricity distribution network does not have an electricity generation unit.

Preferably, said electricity distribution network comprises an electricity generation unit.

Preferably, said electricity generation unit is a microgeneration unit.

Preferably, said electricity generation unit comes from renewable energies.

Preferably, said communication device comprises a PLC (power line communication) telecommunications device.

Preferably, said communication device comprises radio communication systems.

Preferably, said communication device comprises fibre optic communication systems.

Preferably, said control device comprises various electronic processors.

Preferably, said virtual meshed network has a bidirectional electricity flow.

Preferably, the final nodes are in a low-voltage network.

Preferably, said virtual meshed network has transformation centres that are interconnected by a single path via electricity networks.

Preferably, said control centres have output electronics that use isolate gate bipolar transistor technology.

Preferably, said control centres have a remote unit that controls electricity network operating elements, network sensors and storage devices.

To better understand the invention, the accompanying drawings are an explanatory but not limiting example of an embodiment of the present invention.
Fig. 1 is a traditional tree network diagram belonging to the prior art.
Fig. 2 is a tree network diagram according to the present invention which can be controlled in a similar way to a virtual meshed network.
Fig. 3 is a diagram of the storage device according to the present invention.
Fig. 4 is a diagram of the interoperability architecture according to the present invention.

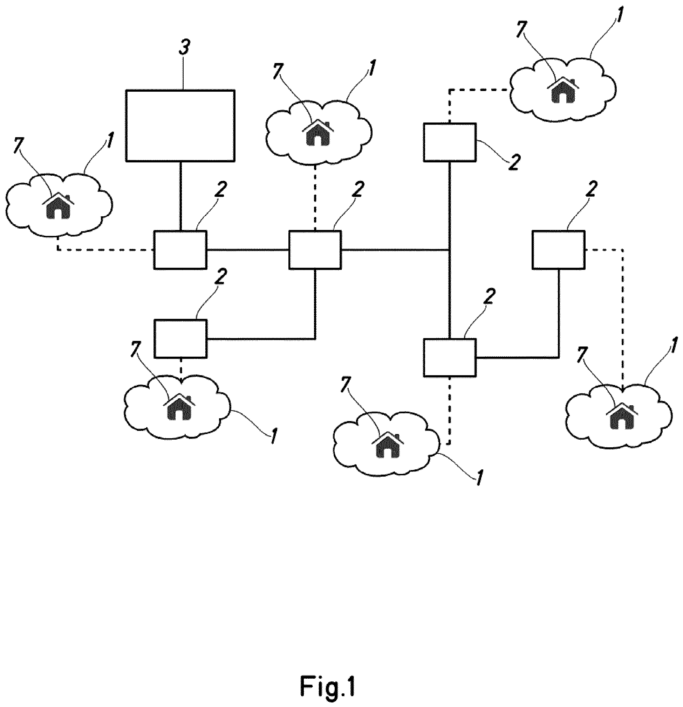

Fig. 1 shows the structure of a tree network (also known as a radial network) belonging to the prior art. In the case of a tree network, only one direction of energy flow is possible: the users or consumers -7- located in a low-voltage network -1- receive electrical power from the sub-station -3- via the transformation centres -2-. This non-claimed embodiment of a tree network has no electricity generation unit. The transformation centres -2- are interconnected electrically by a single path via electricity networks.

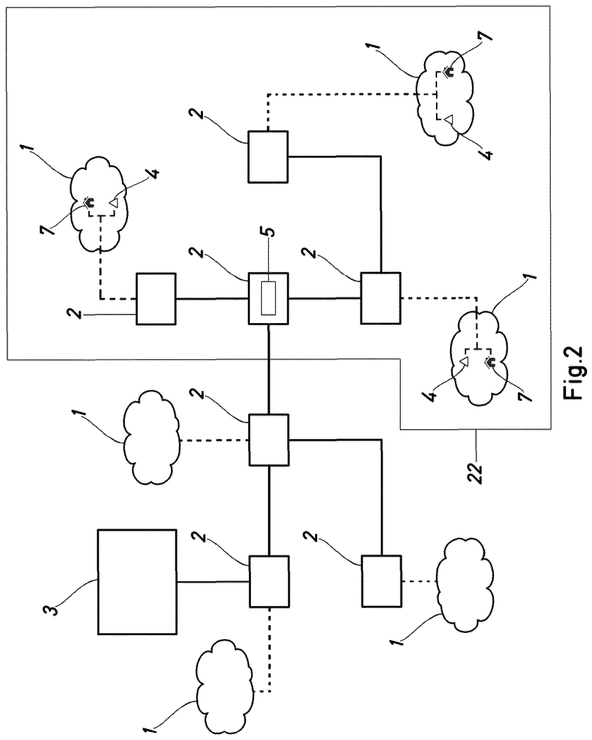

Fig. 2 shows a tree network according to the present invention, which can be controlled in a similar way to a virtual meshed network. Said network -22- acts virtually as if it were meshed, can supply a point of its network from the sub-station via the transformation centres or from the local controller -5- (incorporated through the control, output and storage devices). A low-voltage network -1- spread over a wide area has a plurality of users or consumers -7- which in turn could have electricity generation systems -4-. Said electricity generation systems are preferably microgeneration systems, preferably of renewable energies.

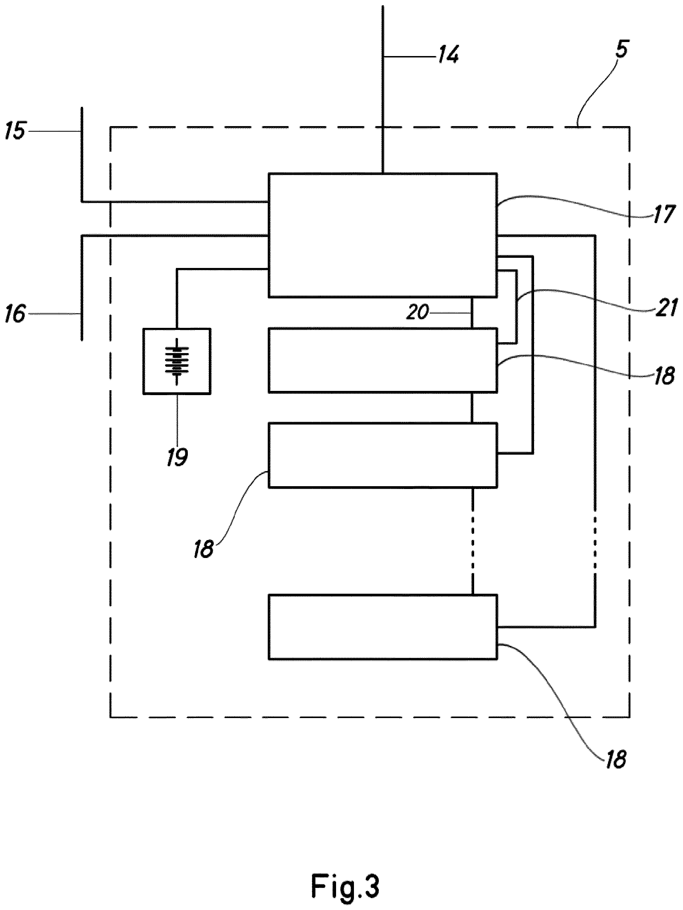

In this type of virtual meshed network according to the present invention, the electricity flow may be two-way. The sub-station -3-, transformation centre -2-, or directly from a control centre that is not necessarily connected electrically, are in communication with a local controller -5- located in a transformation centre -2-. A control device -17-, a communication device -14- and an electricity storage device -18- are situated in said local controller -5- (see Fig. 3).

This is possible due to the storage arranged in the control centres -5- which may selectively absorb energy from the network or alternatively emit energy thereto. Unlike known mixed storage systems arranged at consumers, the storage device receives electrical power from the network, and not directly from the surplus production of a producer or prosumer without previously passing through the network.

In another additional embodiment the control device -17-(see Fig. 3) is installed directly in the transformation centre -2-.

The geographical distribution of the electrical installations, basically made up of transformation centres interconnected by a single path via electricity networks, is improved by the advances of the present invention; the local controller -5- is designed as a virtual electricity network which allows the virtual operation of said network as a meshed network.

Fig. 3 is a diagram of the local controller -5-, which comprises the set of elements and devices which make the virtual meshed network possible. Said local controller -5-has a connection to the network -15-, a connection to the users -16- or prosumers via the electrical infrastructure of a distributor, and a communication device -14-. Said controller -5- comprises a control device -17- having output electronics that use IGBT (isolate gate bipolar transistor) technology, an electricity storage device -18-formed by batteries, and an earth -19-. Internally, there are internal communication devices -21- and internal output connections -20- between said storage devices -18- and the control device -17-.

In an additional embodiment, there may be no electrical power storage devices -18- in the control centre.

Said connection to the network -15- may be direct (as shown in Fig. 3) or by means of elements such as fuses, switches, contacts, etc.

Said control device -17- has electrical and/or telecommunications interconnection between the different devices and management of the decision-making protocols, and uses elements such as low- and medium-voltage switches, electrical protection devices and fault detectors.

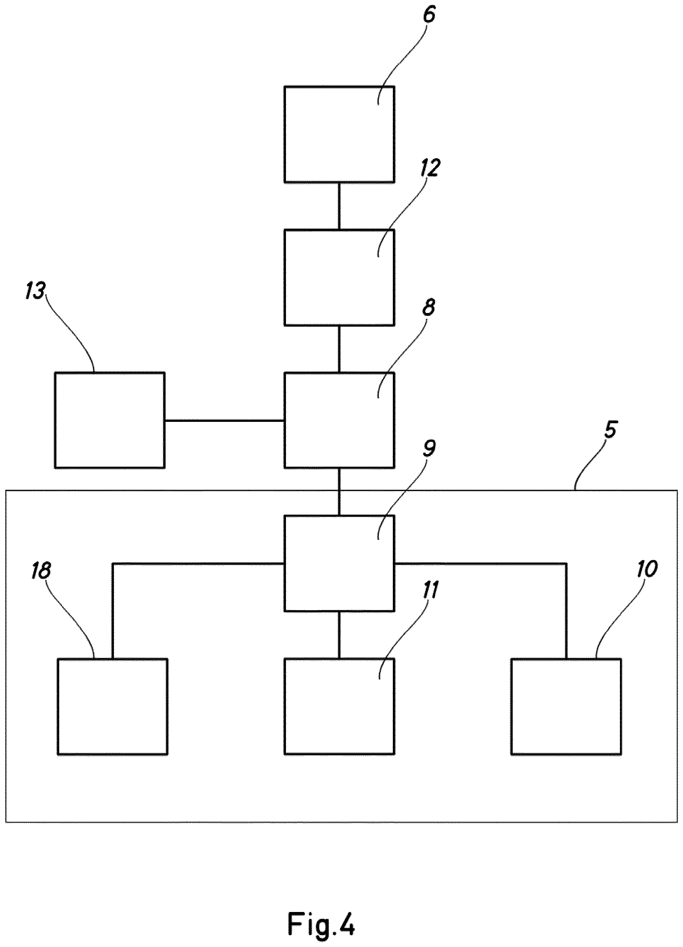

Fig. 4 is the diagram of the telecommunications levels. The LEMS (local energy management system) -6- situated in the sub-station has a centralised control -12-. Said centralised control in turn manages different elements, such as a main remote terminal unit -8- and a local energy management system -13-. Said main remote terminal unit -8-in turn has a remote terminal unit -9-. Said remote terminal unit -9- comprises the control device and the connection device (devices not shown in Fig. 4). Moreover, said remote unit -9- controls electricity network operating elements -10-, network sensors -11- and the storage devices -18-.

Said remote terminal unit -9-, together with its dependent elements (electricity network operating elements -10-, network sensors -11- and the storage devices -18-), is incorporated in the local control -5-.

The communication elements of the control centre allow the network to be operated while taking advantage of the distributed storage possibilities offered by the network, preferably independent of consumers, provided by the present invention.

Being dependent on a consumer and having selective electrical power storage, the system operator can select its operating parameters to balance the network. In particular, the operator can select an operation such as 'consumer' (storing energy) or 'producer' (dumping power into the network) and the quantity thereof.

The present invention, in its different embodiments, allows a tree or radial network to be provided with functionalities such as output flow control, automatic fault location, isolation and restoration of supply, voltage control, energy quality and a stability indicator of the evaluation, etc. based on the operation of the control centres with storage facilities.

Although the invention has been presented and described with reference to embodiments thereof, it should be understood that said embodiments do not limit the invention, and so many structural or other details which will be obvious to persons skilled in the art after interpreting the subject matter disclosed in the present description, claims and drawings, may vary. All the variants and equivalents are therefore included within the scope of the present invention if they can be considered to fall within the most extensive scope of the following claims.

## Claims

1. Electricity distribution network (22) of tree typology, supplied from a transformation centre (2), said network (22) having intermediate nodes connected to branches of the distribution network and final nodes and comprising in said intermediate nodes a control centre (5), said control centre having:
- a connection (15) to the network,
- a control device (17),
- a communication device (14), and
- an electricity storage device (18),
the electricity storage device (18) being configured to store power from the network (22) or alternatively to dump power into the network (22),
such that the network (22) has means for supplying points of the network (22) from different freely chosen points by selecting the control centre (5) that emits power from said storage device,
**characterised in that** said control centre (5) further comprises a connection (16) to the users or prosumers via the electrical infrastructure of a distributor,
and said control centre (5) is not directly connected to any consumer and is configured to permit the operation of the associated branches of said electricity distribution network (22) of tree typology as an island or connected to the network.

2. Electricity distribution network (22) according to claim 1, **characterised in that** the electricity storage device (18) receives electrical power from the network, and not directly from the surplus production of a producer or prosumer without previously passing through the network.

3. Electricity distribution network (22) according to any one of the preceding claims, **characterised in that** said intermediate nodes are connected only to branches of the distribution network, not to consumers.

4. Electricity distribution network (22) according to any one of the preceding claims, **characterised in that** the connection of the control centre (5) to the network may be by means of elements such as fuses, switches or contacts.

5. Electricity distribution network (22) according to any one of the preceding claims, **characterised in that** said control centre (5) does not have an electricity generation unit.

6. Electricity distribution network (22) according to any one of the preceding claims, **characterised in that** at least some of the final nodes are provided with an electricity generation unit.

7. Electricity distribution network (22) according to claim 1, **characterised in that** said communication device (14) comprises a power line communication, PLC, telecommunications device.

8. Electricity distribution network (22) according to claim 1, **characterised in that** said communication device (14) comprises radio communication systems.

9. Electricity distribution network (22) according to claim 1, **characterised in that** said communication device (14) comprises fibre optic communication systems.

10. Electricity distribution network (22) according to any one of the preceding claims, **characterised in that** said control device (17) comprises various electronic processors.

11. Electricity distribution network (22) according to any one of the preceding claims, **characterised in that** it has a bidirectional electricity flow.

12. Electricity distribution network (22) according to any one of the preceding claims, **characterised in that** the final nodes are in a low-voltage network (1).

13. Electricity distribution network (22) according to any one of the preceding claims, **characterised in that** it has transformation centres (2) that are interconnected by a single path via electricity networks.

14. Electricity distribution network (22) according to any one of the preceding claims, **characterised in that** said control centres (5) have a remote unit that controls electricity network (22) operating elements, network sensors and storage devices.

## Patentansprüche

1. Elektrizitätsverteilungsnetz (22) mit Baumstruktur, das von einem Transformationszentrum (2) gespeist wird, wobei das Netz (22) Zwischenknoten, die mit Zweigen des Verteilungsnetzes verbunden sind, und Endknoten aufweist und in den Zwischenknoten eine Steuerzentrale (5) umfasst, wobei die Steuerzentrale Folgendes aufweist:
- einen Anschluss (15) an das Netz,
- eine Steuereinrichtung (17),
- eine Kommunikationseinrichtung (14) und
- eine Elektrizitätsspeichereinrichtung (18),
wobei die Elektrizitätsspeichereinrichtung (18) eingerichtet ist, Strom aus dem Netz (22) zu speichern oder alternativ Strom in das Netz (22) abzugeben,
so dass das Netz (22) Mittel zur Versorgung von Punkten des Netzes (22) von verschiedenen frei gewählten Punkten aus aufweist, indem die Steuerzentrale (5) ausgewählt wird, die Strom von der Speichereinrichtung abgibt,
**dadurch gekennzeichnet, dass** die Steuerzentrale (5) des Weiteren einen Anschluss (16) zu den Nutzern oder Prosumenten über die elektrische Infrastruktur eines Verteilers umfasst,
und dass die Steuereinrichtung (5) mit keinem Verbraucher direkt verbunden ist und eingerichtet ist, den Betrieb der zugeordneten Zweige des Elektrizitätsverteilungsnetzes (22) in Baumstruktur als Insel oder angeschlossen an das Netz zu ermöglichen.

2. Elektrizitätsverteilungsnetz (22) nach Anspruch 1, **dadurch gekennzeichnet, dass** der Elektrizitätsspeicher (18) elektrischen Strom aus dem Netz und nicht direkt aus der Überschussproduktion eines Erzeugers oder eines Prosumenten erhält, ohne zuvor das Netz zu durchlaufen.

3. Elektrizitätsverteilungsnetz (22) nach einem der vorangegangenen Ansprüche, **dadurch gekennzeichnet, dass** die Zwischenknoten nur mit Zweigen des Verteilungsnetzes, nicht aber mit Verbrauchern verbunden sind.

4. Elektrizitätsverteilungsnetz (22) nach einem der vorangegangenen Ansprüche, **dadurch gekennzeichnet, dass** der Anschluss der Steuerzentrale (5) an das Netz über Elemente wie Sicherungen, Schalter oder Kontakte erfolgen kann.

5. Elektrizitätsverteilungsnetz (22) nach einem der vorangegangenen Ansprüche, **dadurch gekennzeichnet, dass** die Steuerzentrale (5) keine Elektrizitätserzeugungseinheit aufweist.

6. Elektrizitätsverteilungsnetz (22) nach einem der vorangegangenen Ansprüche, **dadurch gekennzeichnet, dass** zumindest einige der Endknoten mit einer Elektrizitätserzeugungseinheit versehen sind.

7. Elektrizitätsverteilungsnetz (22) nach Anspruch 1, **dadurch gekennzeichnet, dass** die Kommunikationsvorrichtung (14) eine Powerline-Kommunikations-, PLC-, Telekommunikationsvorrichtung umfasst.

8. Elektrizitätsverteilungsnetz (22) nach Anspruch 1, **dadurch gekennzeichnet, dass** die Kommunikationsvorrichtung (14) Funkkommunikationssysteme umfasst.

9. Elektrizitätsverteilungsnetz (22) nach Anspruch 1, **dadurch gekennzeichnet, dass** die Kommunikationsvorrichtung (14) faseroptische Kommunikationssysteme umfasst.

10. Elektrizitätsverteilungsnetz (22) nach einem der vorangegangenen Ansprüche, **dadurch gekennzeichnet, dass** die Steuereinrichtung (17) eine Vielzahl von elektronischen Prozessoren umfasst.

11. Elektrizitätsverteilungsnetz (22) nach einem der vorangegangenen Ansprüche, **dadurch gekennzeichnet, dass** es einen bidirektionalen Elektrizitätsfluss aufweist.

12. Elektrizitätsverteilungsnetz (22) nach einem der vorangegangenen Ansprüche, **dadurch gekennzeichnet, dass** die Endknoten sich in einem Niederspannungsnetz (1) befinden.

13. Elektrizitätsverteilungsnetz (22) nach einem der vorangegangenen Ansprüche, **dadurch gekennzeichnet, dass** es Transformationszentren (2) aufweist, die über einen einzigen Pfad durch Elektrizitätsnetze miteinander verbunden sind.

14. Elektrizitätsverteilungsnetz (22) nach einem der vorangegangenen Ansprüche, **dadurch gekennzeichnet, dass** die Steuerzentralen (5) eine Fernsteuereinheit aufweisen, die die Bedienelemente des Elektrizitätsnetzes (22), die Netzsensoren und die Speichereinrichtungen steuert.

## Revendications

1. Réseau de distribution d'électricité (22) de typologie arborescente, alimenté à partir d'un centre de transformation (2), ledit réseau (22) ayant des noeuds intermédiaires connectés à des branches du réseau de distribution et des noeuds finaux et comprenant dans lesdits noeuds intermédiaires un centre de contrôle (5), ledit centre de contrôle ayant :
- une connexion (15) au réseau,
- un dispositif de commande (17),
- un dispositif de communication (14), et
- un dispositif de stockage d'électricité (18),
le dispositif de stockage d'électricité (18) étant configuré pour stocker de l'énergie provenant du réseau (22) ou alternativement pour décharger de l'énergie dans le réseau (22),
de sorte que le réseau (22) a des moyens pour alimenter des points du réseau (22) à partir de différents points librement choisis en sélectionnant le centre de contrôle (5) qui émet de l'énergie à partir dudit dispositif de stockage,
**caractérisé en ce que** ledit centre de contrôle (5) comprend en outre une connexion (16) aux utilisateurs ou consommateurs professionnels via l'infrastructure électrique d'un distributeur,
et ledit centre de contrôle (5) n'est pas directement connecté à un consommateur quelconque et est configuré pour permettre que les branches associées dudit réseau de distribution d'électricité (22) de typologie arborescente fonctionnent en îlot ou connectées au réseau.

2. Réseau de distribution d'électricité (22) selon la revendication 1, **caractérisé en ce que** le dispositif de stockage d'électricité (18) reçoit de l'énergie électrique provenant du réseau, et non directement du surplus de production d'un producteur ou d'un consommateurs professionnels sans passer préalablement par le réseau.

3. Réseau de distribution d'électricité (22) selon l'une quelconque des revendications précédentes, **caractérisé en ce que** lesdits nœuds intermédiaires sont connectés uniquement à des branches du réseau de distribution, et non pas à des consommateurs.

4. Réseau de distribution d'électricité (22) selon l'une quelconque des revendications précédentes, **caractérisé en ce que** la connexion du centre de contrôle (5) au réseau peut se faire au moyen d'éléments tels que des fusibles, des interrupteurs ou des contacteurs.

5. Réseau de distribution d'électricité (22) selon l'une quelconque des revendications précédentes, **caractérisé en ce que** ledit centre de contrôle (5) ne comporte pas d'unité de production d'électricité.

6. Réseau de distribution d'électricité (22) selon l'une quelconque des revendications précédentes, **caractérisé en ce qu'**au moins certains des nœuds finaux sont pourvus d'une unité de production d'électricité.

7. Réseau de distribution d'électricité (22) selon la revendication 1, **caractérisé en ce que** ledit dispositif de communication (14) comprend un dispositif de communication par courant porteur, par CPL, par télécommunications.

8. Réseau de distribution d'électricité (22) selon la revendication 1, **caractérisé en ce que** ledit dispositif de communication (14) comprend des systèmes de communication radio.

9. Réseau de distribution d'électricité (22) selon la revendication 1, **caractérisé en ce que** ledit dispositif de communication (14) comprend des systèmes de communication par fibre optique.

10. Réseau de distribution d'électricité (22) selon l'une quelconque des revendications précédentes, **caractérisé en ce que** ledit dispositif de commande (17) comprend divers processeurs électroniques.

11. Réseau de distribution d'électricité (22) selon l'une quelconque des revendications précédentes, **caractérisé en ce qu'**il présente un flux d'électricité bidirectionnel.

12. Réseau de distribution d'électricité (22) selon l'une quelconque des revendications précédentes, **caractérisé en ce que** les nœuds finaux sont dans un réseau basse tension (1).

13. Réseau de distribution d'électricité (22) selon l'une quelconque des revendications précédentes, **caractérisé en ce qu'**il comporte des centres de transformation (2) qui sont interconnectés par un chemin unique via des réseaux électriques.

14. Réseau de distribution d'électricité (22) selon l'une quelconque des revendications précédentes, **caractérisé en ce que** lesdits centres de contrôle (5) ont une unité distante qui commande les éléments fonctionnels du réseau de distribution d'électricité (22), les capteurs du réseau et les dispositifs de stockage.
